# EUROPEAN PATENT APPLICATION

(11) **EP 1 727 112 A1**
(43) Date of publication of application: **29.11.2006**
(21) Application number: 05720080.0
(22) Date of filing: 28.02.2005
(51) Int. Cl.: G09F 13/16, E01F 9/00, G06K 19/00, G02B 5/128, B32B 27/00, B62J 39/00

(54) **DISPLAY DEVICE WITH THEFT PREVENTION STRUCTURE**

(30) Priority: 27.02.2004 JP 2004054728
(71) Applicant: NIPPON CARBIDE KOGYO KABUSHIKI KAISHA, Tokyo 108-8466 (JP)
(72) Inventor: MIMURA, Ikuo, Uozu-shi, Toyama 937-0061 (JP)
(74) Representative: Albrecht, Thomas
(86) International application number: PCT/JP2005/003808
(87) International publication number: WO 2005/083661

(57) **Abstract**

A display device provided with a specular reflective layer (16), which is excellent in preventing theft and tampering is provided. The display device is composed of a surface-protective layer (1), information display layer (3), reflective resin sheet (4) and substrate-adhesive layer (5). A specular reflective layer (16) is installed on the reflective resin sheet (4) via a destructive layer (14) and focusing layer (15). When the display device is peeled off from the installation substrate (6), the peeling takes place at the interface of the destructive layer (14) and the reflective resin sheet (4) or specular reflective layer (16) in contact with the destructive layer (14), and/or by destruction of the destructive layer (14), and the specular reflective layer (16) remains on the installation substrate (6). RFID device may be installed on the back of the display device.

## Description

### Technical Filed

This invention relates to a display device equipped with a theft-preventive structure, comprising at least a surface-protective layer (1), information display layer (3), light-reflective resin sheet (4) and a substrate-adhesive layer (5), which is so composed that a specular reflective layer (16) is installed on said light-reflective resin sheet (4) via a destructive layer (14), and the specular reflective layer (16) of the display device and an installation substrate (6) are adhered via the substrate-adhesive layer (5), said display device being characterized in that, when it is peeled off from the installation substrate (6), the separation takes place at the interface of the destructive layer (14) and any one of the layers constituting the reflective resin sheet (4), which is in contact with the destructive layer (14), and/ or by destruction of the destructive layer (14), and the specular reflective layer (16) remains on the installation substrate (6).

Specifically, it is a display device for various signs, labels, signboards and the like, which is useful as a display device excelling in recognizability, as the specular reflective layer (16) installed therein contributes to its intense light reflection.

More specifically, the invention relates to a display device using a retroreflective sheet in which a destructive layer is installed, the display device being useful for signs such as traffic signs and construction signs; number plates on vehicles such as cars and motorcycles; safety materials such as clothing and life preservers; marking on signboards; various kinds of authentication stickers; reflector plates in visible light-, laser light-, or infrared light-reflection type sensors; and the like, because the specular reflective layer (16) having retroreflective structure installed therein provides excellent perceptibility in the night.

Still more specifically, the invention relates to a display device equipped with a theft-preventive structure, in which a reflective resin sheet (4) is installed and which is peeled off by separation at the interface of the destructive layer (14) and any one of the layers constituting the light-reflective resin sheet (4), which is in contact with the destructive layer, and/or destruction of said destructive layer (14), and the specular reflective layer (16) remains on the installation substrate (6), characterized in that a radiofrequency identification device (which may also be referred to as RFID device hereinafter) is provided between the reflective resin sheet (4) and the installation substrate (6) or an auxiliary substrate (39).

In the field of utility as above-described, criminal actions of stealing such display devices to use them in different places are occurring frequently, and display device equipped with theft-preventive structure of the present invention can be favorably used.

The invention furthermore relates to a display device useful for various authentication plates and the like, which is so constructed that, when an attempt is made to peel off the once stuck display device to put it to other use, its specular reflective layer (16) is destroyed because a destructive layer (14) is provided as a part of the reflective resin sheet used in the display device, making its re-use for other purposes impossible (which effect may be hereafter referred to as tampering prevention effect or re-peeling prevention effect).

### Background Art

Display structures in which specular reflective layer (16) is installed for preventing forgery, for example, vapor-deposited resin sheet, hologram sheet or retroreflective sheeting, are favorably used in signs, labels and signboards as above.

Retroreflective sheeting which reflects entering light toward its light source is well known heretofore, and the sheeting utilizing its retroreflectivity has been widely used in the fields of application as above-named. In particular, adoption of retroreflective sheeting for various kinds of authentication stickers is increasing in recent years.

Sheetings of structures like hologram or retroreflective sheeting, however, are readily available, and various methods for preventing their forgery have been proposed in the past.

As retroreflective sheeting, enclosed lens-type retroreflective sheeting and encapsulated lens-type retroreflective sheeting using micro-glass beads on which a specular reflective layer is provided, are well known.

Examples of enclosed lens-type retroreflective sheeting are disclosed in detail in JP 59(1984)-71848A (corresponding to US Patent Nos. 4,721,694 and 4,725,494) to Belisle, which are to be referred to for specific disclosures.

Examples of encapsulated lens-type retroreflective sheeting are disclosed in detail in JP Sho40 (1965)-7870B (= U. S. Patent No. 3,190,178) to McKenzie, JP Sho52(1977)-110592A (= U. S. Patent No. 4,025, 159) to McGrath, and JP Sho62(1987)-121043A (=U. S. Patent No. 5, 064, 272) to Bailey, et al, which are to be referred to for specific disclosures.

Furthermore, various techniques have been proposed for prevention of tampering of such retroreflective sheeting.

International Publication WO 01/02883 to Bacon discloses provision of novel removable retroreflective sheeting whose adhesive layer adjacent to the specular reflective layer comprises an organofunctional coupling agent.

However, according to the technology as disclosed in said patent, in the occasion of the removal, the specular reflective layer remains on the side of those micro-glass beads to retain retroreflectivity of the sheeting and can be re-used when a new adhesive layer is laminated thereon. This is undesirable from the standpoint of preventing tampering.

Also JP 10(1998)-512818A to Faykish discloses a security laminate comprising
(a) protective layer having first and second surfaces;
(b) embossed layer bonded to at least a portion of the second surface of the protective layer;
(c) reflective layer bonded to at least a portion of the embossed layer/protective layer composite;
(d) adhesion enhancing layer bonded to a portion of the reflective layer/embossed layer/protective layer composite; and
(e) adhesive bonded to at least a portion of the adhesion enhancing layer/reflective layer/embossed layer/protective layer composite
   wherein the bond between the reflective layer and the adhesion enhancing layer and the bond between the adhesion enhancing layer and the adhesive are each more tenacious than the bond between the reflective layer and embossed layer and further wherein the bond between the adhesive and the adhesion enhancing layer is more tenacious than the bond between the adhesive and reflective layer.

The invention discloses to cause destruction of the security laminate by partial installment of reflective layer as a part of hologram, adhesive layer and adhesion enhancing layer, to achieve tampering-prevention effect. However, it discloses nothing about tampering-preventing technology and theft-preventing technology relating to retroreflective sheeting.

JP2003-524205A to Florczak discloses a sheeting, comprising.
a. at least one layer of microlenses, the layer having first and second sides;
b. a layer of material disposed adjacent the first side of the layer of microlenses;
c. an at least partially complete image formed in the material associated with each of a plurality of the microlenses, wherein the image contrasts with the material; and
d. a composite image, provided by the individual images, that appears to the unaided eye to be floating above or below the sheeting, or both.
   While this invention discloses to have hologram exhibit tampering-preventive effect, however, it contains no disclosure about technology for preventing tampering or theft relating to retroreflective sheeting.

Furthermore, International Publication WO02/103629A1 to Mimura, one of the inventors of the present invention, proposed RFID-type retroreflective sheeting structure in which RFID (radio frequency identification technique) and retroreflective sheeting are combined, in an attempt to improve prevention of forgery.

As above, various forgery-preventing techniques have been disclosed in prior art, but they do not provide means for preventing theft where those prior art devices are used, or means for preventing tampering where stolen devices are used. Rather, another problem is given rise due to the high forgery-preventing level that the used stolen devices or tampered devices are difficult to be distinguished from genuine devices.

With the view to solve such a problem, International Application PCT/JP2004/012872 and JP Application 2005-035231 by Mimura, et al. have disclosed a retroreflective sheeting in which a destructive layer is installed, the retroreflective sheeting comprising a surface layer and a retroreflective element layer, at least one destructive layer being installed between the layers constituting the retroreflective sheeting, characterized in that the resin constituting the destructive layer is alicyclic polyolefin resin, acrylic resin, cellulose derivative, silicone resin, fluorinated resin, polyurethane resin, alkyd resin, butyral resin, polyester resin or a mixture of two or more of them, an adhesive layer is further provided on the retroreflective sheeting and, when the sheeting is peeled off from the base material onto which it is stuck once, the peeling is effected at the interface of the destructive layer and a layer which is in intimate contact with the destructive layer and/or by destruction of the destructive layer.

### Disclosure of the Invention

### Problem to be solved by the invention

The problem to be solved by the invention lies in provision of a display device which is imparted with higher level of theft- or tampering-preventive effect, in addition to the forgery- and tampering-preventive effect of prior art.

Specifically, display devices in which a specular reflective layer of retroreflective structure is installed excel in recognizability in the nighttime and hence are used for signs such as traffic signs and construction signs; number plates on vehicles such as cars and motorcycles; safety materials such as clothing and life preservers; marking on signboards; various kinds of authentication stickers; reflector plates in visible light-, laser light-, or infrared light-reflection type sensors; and the like. In such utilities, criminal actions of dismounting the display devices to use them for other purposes occur frequently. The problem to be solved by the present invention is to provide a display device having a theft-preventing or tampering-preventing structure.

### Means to solve the problem

In the display device having the theft-preventing structure, the specular reflective layer (16) is installed on a part of the reflective resin sheet (4) via the destructive layer (14), and when an attempt is made to peel off the once stuck reflective resin sheet (4) containing the specular reflective layer (16) to divert it to other usage by dismounting the display device of the present invention, the specular reflective layer (16) is destroyed to make the theft or tampering impossible.

Specifically, the problem to be solved by the present invention is to provide a display device comprising at least a surface-protective layer (1), information display layer (3), reflective resin sheet (4) and a substrate-adhesive layer (5), which is so composed that a specular reflective layer (16) is installed on said reflective resin sheet (4) via a destructive layer (14), and the face of specular reflective layer (16)-installed side of the display device and an installation substrate (6) are adhered via the substrate-adhesive layer (5), said display device being characterized in that, when it is peeled off from the installation substrate (6), the separation takes place at the interface of the destructive layer (14) and any one of the layers constituting the reflective resin sheet (4), which is in contact with the destructive layer (14), and/ or by destruction of the destructive layer (14), and the specular reflective layer (16) remains on the installation substrate (6).

### Effect of the Invention

The invention relates to a display device having a theft-preventive structure which can make it impossible to tamper or divert the device to other purposes, because a destructive layer is provided on a part of the reflective resin sheet and hence the specular reflective layer is destroyed in an attempt to peel off the once stuck reflective resin sheet in which the specular reflective layer is installed to divert it to other purposes.

### Brief Explanation of Drawings

Fig. 1 are diagrams explaining the display device of the present invention.

Fig. 2 are diagrams explaining another display device according to the present invention.

Fig. 3 is a cross-sectional view of a display device of an embodiment according to the present invention.

Fig. 4 is a cross-sectional view of a display device of another embodiment according to the present invention.

Fig. 5 is a perspective view of a display device of another embodiment according to the present invention.

Fig. 6 is an enlarged perspective view of a display device of another embodiment according to the present invention.

### Best Mode for Working the Invention

The display device according to the present invention comprises at least a surface-protective layer (1), information display layer (3), reflective resin sheet (4) and a substrate-adhesive layer (5), characterized in that a specular reflective layer (16) is installed on the reflective resin sheet (4) via a destructive layer (14) and the face of specular reflective layer (16)-installed side of the display device and an installation substrate (6) are adhered via the substrate-adhesive layer (5), so that when the display device is peeled off from the installation substrate (6), the separation takes place at the interface of the destructive layer (14) and any one of the layers constituting the reflective resin sheet (4), which is in contact with the destructive layer (14), and/ or by destruction of the destructive layer (14), and the specular reflective layer (16) remains on the installation substrate (6).

Preferably, the surface-protective layer (1) in the present invention allows reading of the information posted on the light-transmissive or non-light-transmissive information display layer (3) through the surface-protective layer (1). Its preferred percent transmission is 50 - 95%. Thickness of the surface-protective layer (1) can be suitably selected, while it is preferably 30 - 20,000 µm. It is also preferred to add various coloring agent, ultraviolet absorber, light stabilizer, antioxidant and the like to the surface-protective layer (1).

As the construction material useful for the surface-protective layer (1), any resin satisfying the above performance requirement can be used without particular limitation and, for example, acrylic resin, polycarbonate resin, vinyl chloride resin, ABS resin, polystyrene resin, polyethylene resin, polypropylene resin and fluorinated resin can be used. Such a surface-protective layer (1) is bonded to the reflective resin sheet (4) or information display layer (3) by such means as an adhesive layer (2) of various heat-sensitive adhesive, thermosetting adhesive, ultraviolet- and photo-crosslinkable adhesive or pressure sensitive adhesive, or by thermal fusion.

The information display layer (3) according to the present invention is installed by such means as printing of various colored resins, adhesion of cut-out letters or the like. The information display layer (3) may be transmissive or non-transmissive to light, while transmissive layer is preferred for perceptibility in the night when the reflective resin sheet (4) is retroreflective. As the means for printing, screen printing, flexography, gravure printing, thermal transfer printing, electronic printing using, for example, laser printer and ink-jet printing can be used, although not limited thereto.

As the installable information, those by letters, numerals, pictures, bar codes and logos, either singly or in combination, can be installed. The information may be those discernible with unaided eyes or invisible ones discernible under ultraviolet radiation. Furthermore, the information display layer (3) may be a holographic or ultraviolet-luminescent printed layer differing from the specular reflective layer (16).

In the light-reflective resin sheet (4) according to the present invention, a specular reflective layer (16) is installed via destructive layer (14). Specifically, the reflective resin sheet (4) may be provided with a hologram layer. It may be a micro glass beads-type retroreflective sheeting layer composed of micro glass beads (13) and a specular reflective layer (16) provided thereon via a destructive layer (14) and a focusing layer (15), or the reflective resin sheet (4) may be a specular reflection type prismatic retroreflective sheet layer formed of many microprisms and a specular reflective layer (16) mounted on the reflective side faces of said microprisms.

The reflective resin sheet (4) may be a micro glass beads-type retroreflective sheeting layer formed of micro glass beads (13) and a specular reflective layer (16) installed on the surfaces of the micro glass beads via a destructive layer (14) and a focusing layer (15). Such micro glass beads-type retroreflective sheeting structure can take a form of enclosed micro glass beads type retroreflective structure, encapsulated lens type micro glass beads type retroreflective structure, the former being particularly preferred.

It is also preferred that any one of the layers constituting the reflective resin sheet (4), in particular, the surface layer (11), is a specular reflection type microprismatic retroreflective sheeting layer formed of microprisms and a specular reflective layer (16) which is installed on the reflective side faces of the microprisms.

As the resin useful for the microprismatic layer constituting the reflective resin sheet (4), for example, acrylic resin, polycarbonate resin, vinyl chloride resin, polyurethane resin, ABS resin, polystyrene resin, polyethylene resin and polypropylene resin can be named. The layer made of such a resin can be imparted fluorescent appearance by addition of fluorescent coloring agent, which is advantageous for imparting perceptibility particularly in the daytime.

For the substrate-adhesive layer (5) in the present invention, various heat-sensitive adhesives, thermosetting adhesives, photo-crosslinkable adhesive or pressure sensitive adhesive can be used. In particular, acrylic resin-derived pressure sensitive adhesive or silicone resin derived pressure sensitive adhesive are preferred because of their durability and adherability.

The substrate-adhesive layer (5) preferably is bonded to the installation substrate (6) and to the specular reflective layer (16) with a bonding force stronger than that between the hereafter described destructive layer (14) and specular reflective layer (16) or focusing layer (15), or that between the destructive layer (14) and reflective resin sheet (4).

In the reflective resin sheet (4) according to the present invention, a specular reflective layer (16) is installed via the destructive layer (14) and focusing layer (15). The specular reflective layer (16) is also adhered to the installation substrate (6) via the substrate-adhesive layer (5), and when the display device is peeled off from the substrate, the peeling takes place at the interface of the destructive layer (14) and a resin layer adjacent the destructive layer in the reflective resin sheet (4), and/or at the interface of said resin layer and the specular reflective layer (16), and/or by destruction of the destructive layer (14) and the specular reflective layer (16) remains on the installation substrate (6).

The destructive layer (14) may be installed over the whole surface of the sheeting or installed partially by such means as printing or the like. When a partial installation method is used, the reflective performance of the specular reflective layer (16) differs from that at the parts where the destructive layer (14) is not installed, and hence the layer (14) can be used as a kind of information display area. Furthermore, such information display area can be made distinct with use of light-transmissive or non-transmissive colored resin for the destructive layer (14).

The resin which forms the destructive layer (14) is subject to no particular limitation so long as it is light-transmissive, while the layer is preferably made of cellulose derivatives, cyclopentane resin (following formulae la, 1b and 1c), vinylcyclopentane resin (following formula 2a), vinylcyclopentanorbornene resin (following formula 2b), cyclohexadiene resin (following formula 3a), cyclohexane resin (following formula 3b) or methacrylic acid ester resin (following formula 4), particularly for durability and light transmission. 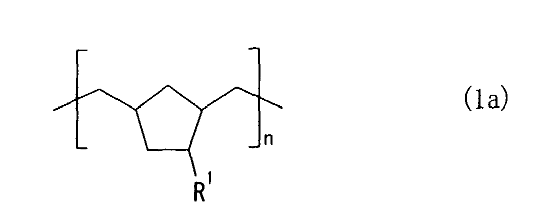 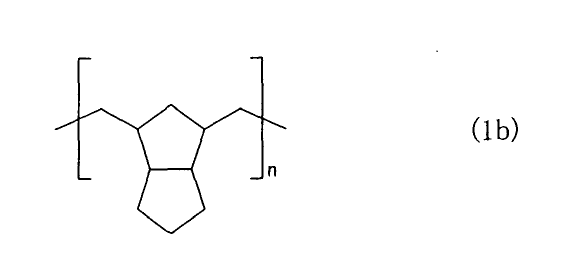 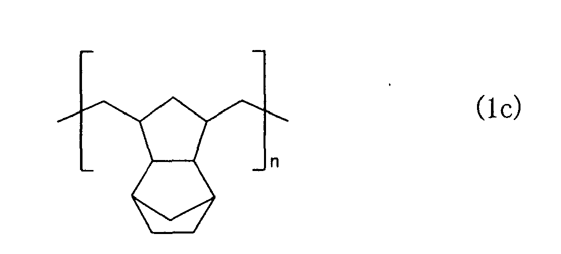 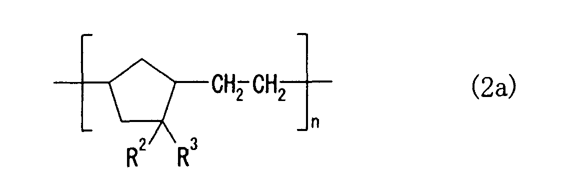 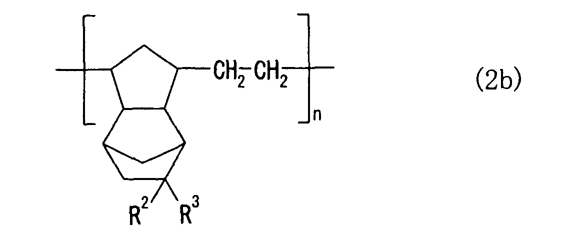 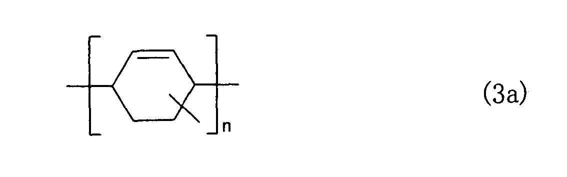 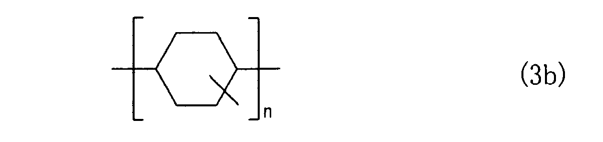 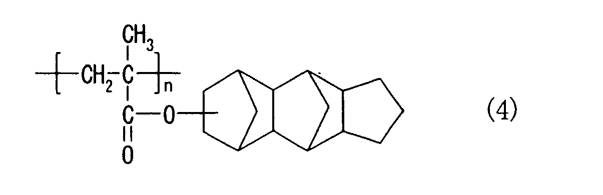 (in the above formulae, substituent R¹ is hydrogen atom or cyclohexyl, substituents R² and R³ are hydrogen atom (-H), methyl (-CH₃), cyano(-CN), methyl carboxylate (-COOCH₃), ethyl carboxylate (-COOC₂H₅), cyclohexyl carboxylate (-COO(_{c}-C₆H₅)) or n-butyl carboxylate (-COO(ₙ-C₄H₉)), and
n stands for number-average degree of polymerization).

Concerning the resins forming the destructive layer (14) and preferred modes of installation, International Application PCT/JP2004/012872 and Japanese Patent Application No. 2005-035231 to Mimura, et al. give detailed descriptions. For further explanation, therefore, these applications can be referred to.

As the specular reflective layer (16) of the present invention, thin metallic film of aluminum, nickel, chromium, silver, gold or the like can be installed by such means as vapor deposition, chemical plating, sputtering and the like. It is also possible to provide a specular reflective layer (16) with a photo-reflective ink containing metal particles. As the installation thickness, 0.05 - 5 µm is preferred. Again the specular reflective layer (16) may be installed over the whole surface or partially. When it is to be partially installed, the metallic reflective layer can be applied after advance masking of the installation zone or the layer can be partially removed by such means as etching. In that occasion, the specular reflective layer (16) may be installed in the shape of a communication antenna of RFID device, which can be used as the communication antenna. Such destructive communication antenna exhibits particularly excellent tampering-preventing effect and is preferred.

The reflective resin sheet (4) according to the present invention can be a micro glass beads-type retroreflective sheeting layer comprising micro glass beads and a specular reflective layer (16) which is installed on the micro glass beads. Further particulars of such a sheeting are described in International Application PCT/JP2004/012872 and Japanese Patent Application 2005-035231, both to Miura, et al.

The reflective resin sheet (4) of the present invention can also be a microprismatic retroreflective sheeting layer comprising microprisms and a specular reflective layer (16) which is installed on the reflective side faces of the microprisms via a destructive layer (14). Useful prisms are triangular-pyramidal cube-corner retroreflective elements, hexagonal full-cube retroreflective elements, tent-shaped retroreflective elements or the like. Preferably those elements have a size, in terms of height of the element, ranging 30 - 500 µm.

As the resin useful for the microprismatic retroreflective sheeting layer, those light-transmissive reflective resins can be used without further particular limitations. For example, acrylic resin, polycarbonate resin, vinyl chloride resin, ABS resin, polystyrene resin, polyethylene resin, polypropylene resin and polyurethane resin can be used. Of these, polycarbonate resin, acrylic resin, polyurethane resin and vinyl chloride resin are preferred in respect of transparency and durability.

Where the reflective resin sheet (4) is a microprismatic retroreflective sheeting layer, the specular reflective layer (16) is preferably installed on the reflective side faces of the prismatic elements, by such means as vapor deposition, and the destructive layer (14) is installed on the reflective side faces, preferably partially, in advance of the vapor deposition treatment.

As above, the specular reflective layer (16) is provided on the retroreflective resin sheet (4) according to the present invention, via the destructive layer (14) which is preferably partially installed, and when the display device is peeled off from the substrate, the specular reflective layer (16) is partially destroyed and remains on the installation substrate (6). In consequence, in the occasion of the peeling off, retroreflective elements such as the micro glass beads (13) or prismatic retroreflective elements separate from the specular reflective layer (16) to lose retroreflectivity, exhibiting remarkable tampering-preventive effect.

The display device of the present invention can be adhered to another auxiliary substrate (39) which is mechanically strongly fixed on the installation substrate (6), via the substrate-adhesive layer (5). The auxiliary substrate (39) may be made of metal or resin. As the means for mechanical fixing, screwing, calking, welding or the like can be used. Use of the auxiliary substrate (39) is advantageous in that the installation substrate (6) is liable to less damage compared to the case of directly installing the display device onto the installation substrate (6). The shape of the auxiliary substrate (39) may be the same with that of the display device or may be of a larger size so as to wrap-up the display device. For detaching a display device having such a structure, the reflective resin sheet (4) must be detached from the auxiliary substrate (39), for removing the auxiliary substrate (39) from the installation substrate (6).

An active- or passive-type RFID device (41) equipped with a communication antenna can be installed on the back of the display device of the present invention. An active-type RFID device is provided therein a power source device such as batteries, external power source or the like, and the RFID device constantly sends off radio waves to exchange information. Whereas, a passive-type RFID device receives radio waves from external devices through the communication antenna into the circuits of the RFID device to use them as the driving electric current of the RFID device.

In the reflective resin sheet (4) of the present invention, preferably at least the zones of the specular reflective layer (16) which overlap with the communication antenna (40) are entirely or partially eliminated, so that the display device should have the function to transmit radio waves. The specular reflective layer (16) may be removed from the whole zone occupied by the antenna, or may be removed, for example, reticularly, to an extent to impart to the device the function to transmit radio waves.

Specifically, a method of reticularly removing the specular reflective layer (16) which is installed on the front face of the communication antenna (40) by such means as etching, can be adopted. Again, particularly in the case of micro glass beads-type retroreflective sheeting, the specular reflective layer (16) may be installed on the backs only of the glass beads but not on the parts which are in contact with a holding layer (12) between the glass beads. This embodiment is particularly preferred because it can provide both satisfactory retroreflectivity and the function to transmit radio waves. Concerning production processes for such retroreflective sheeting, U.S. Patent 4,653,854 to Miyata provides detailed descriptions and can be referred to.

It is also preferable to install the communication antenna (40) externally on the display device, for improving the communicating function of the RFID device. The communication antenna (40) to be externally installed can be mounted, for example, on a side of the auxiliary substrate (39), and electrically connected to RFID device installed in the display device, preferably in such a manner that an attempt to remove the display device would destroy the connection and let the device lose its function.

The specular reflective layer (16) according to the invention may be partially installed on the reflective resin sheet (4) in such a manner as to form an antenna to be used for the RFID device, and can have such a structure that the specular reflective layer (16) is destroyed when the display device is peeled off from the installation substrate (6) and its antenna function is lost. The display device having such a structure is particularly preferred because of its still improved theft and tampering preventive effect, the effect to be achieved by the present invention, as combined with the forgery preventive effect of the RFID device.

Above retroreflection type reflective resin sheet (4) structure in which the specular reflective layer (16) forms an antenna for RFID device is described in details in International Publication WO 02/103629A1 to Mimura.

Furthermore, when the installation substrate (6) is made of metal, use of resin-made auxiliary substrate (39) is preferred with the display device in which the specular reflective layer (16) forms the antenna to be used for RFID device, because it can improve radio wave disturbance occurring due to reflection of radio waves by the metallic installation substrate (6). In order to attain such an improvement in radio wave disturbance, the auxiliary substrate (39) preferably has a thickness of at least 5 mm, in particular, at least 10 mm. It is also possible to install a radio wave absorber between the auxiliary substrate (39) and the display device. A convenient radio wave absorber is a resin sheet formed by dispersing radio wave absorbing substance such as ferrite in a resin such as rubber.

The RFID device (41) or the communication antenna (40) can be installed on the auxiliary substrate (39). In particular, active type RFID device has a relatively large size, and hence such RFID device (41) in the auxiliary substrate (39) is preferred for better appearance of the display device. This embodiment of enclosing an active type RFID device in auxiliary substrate is particularly effective for preventing theft of RFID device. In also the active type RFID device, a metallic reflective layer can be used as the antenna. Such a structure excels in theft- and tampering-preventive effect.

Where a passive type RFID device is used, it can be stuck on the reflective resin sheet (4) used in the present invention, as it is thin. In that occasion, the regions of the specular reflective layer (16) which overlap with the antenna region are preferably removed, either entirely or partially.

### Example

Hereinafter constructions of the reflective resin sheet (4) useful for the display device according to the invention and the display device are explained, referring to the drawings.

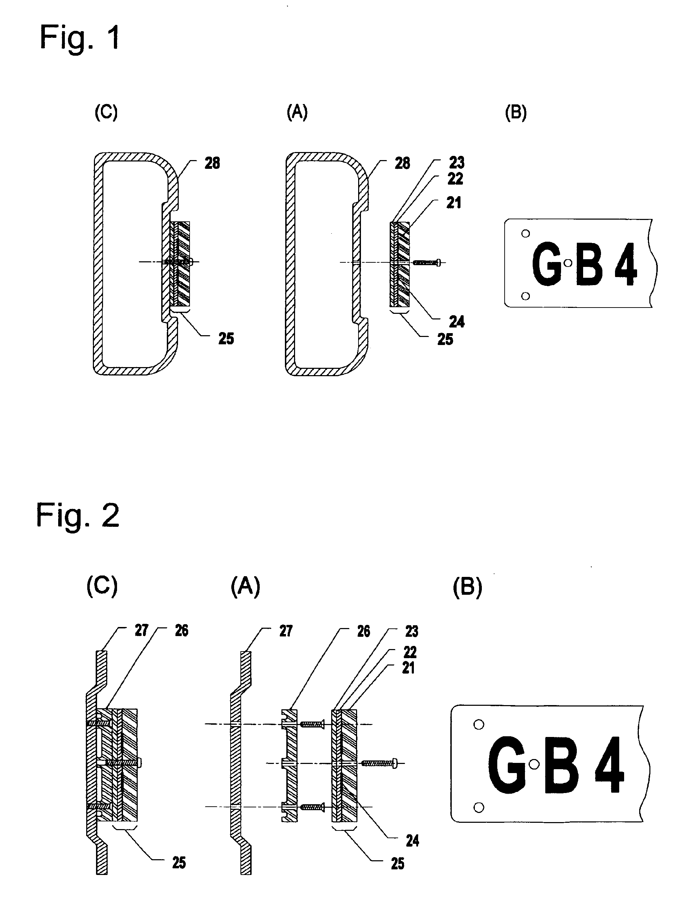

Figs. 1 (A) - (C) explain a display device (25) according to the invention. Fig. 1 (A) shows the display device (25) which is composed of a surface-protective layer (21), information display layer (24), reflective resin sheet (22) and a substrate-adhesive layer (23). Fig. 1 (B) is a plan view of the display device (25), which specifically shows that the display device illustrated therein is a number plate on a vehicle. The display device (25) is stuck on an installation substrate (28) with a substrate-adhesive layer (23). The installation substrate (28) in Fig. 1 is, specifically, a resin-made bumper of a vehicle, and for increasing the mounting strength, the device is preferably fixed with screws. Fig. 1 (C) shows the display device (25) as fixed on the installation substrate (28).

Referring to Fig. 1, when the display device (25) is removed from the bumper which is the installation substrate (28), the specular reflective layer (16) installed in the reflective resin sheet (4) peels off from the reflective resin sheet (4), by separation at the interface with the destructive layer (14) or cohesive failure of the destructive layer (14), and remains on the installation substrate (6). This mechanism allows easy judgment whether the display device is genuine or it has been removed from an installation substrate (6) and put to a wrong use.

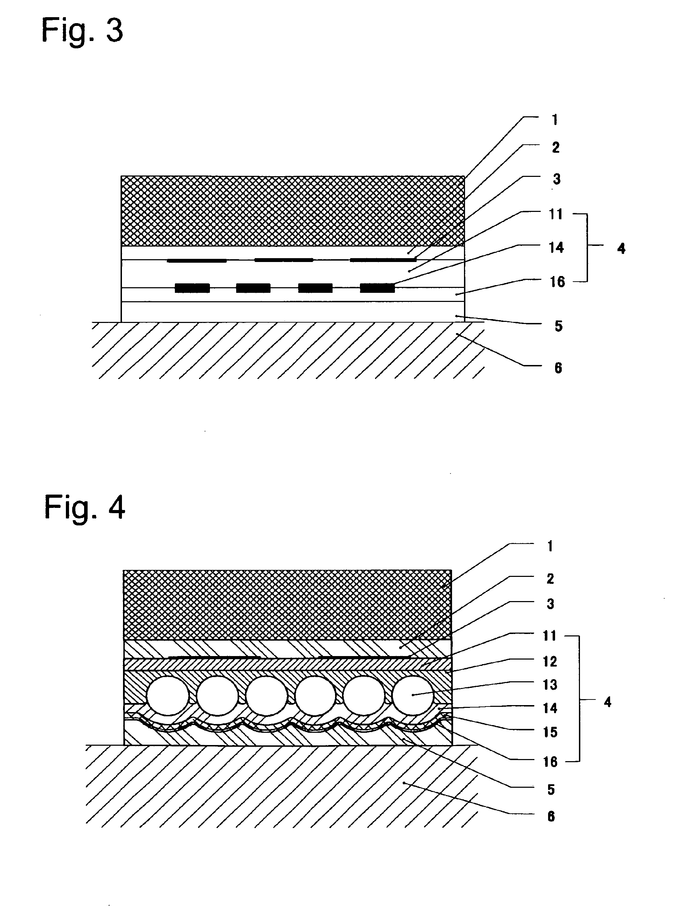

Figs. 2 (A) - (C) explain another display device (25) according to the present invention. Fig. 2 (A) shows the display device (25) which is composed of a surface-protective layer (21), information display layer (24), reflective resin sheet (22), substrate-adhesive layer (23) and an auxiliary substrate (26). Fig. 2 (B) is a plan view, indicating that the specific display device illustrated therein is again a number plate for a vehicle.

The display device (25) is stuck on the auxiliary substrate (26) by the substrate-adhesive layer (23). The display device (25) and auxiliary substrate (26) may be fixed with screws, for further strengthening the fixture. The installation substrate (27) in Fig. 2 is specifically a metallic body of a car, on which the auxiliary substrate (26) is fixed by a mechanical means such as screws, for effecting a strong fixture. Fig. 2 (C) shows the display device (25) as mounted on the installation substrate (27), via the auxiliary substrate (26).

Referring to Fig. 2, for dismounting the display device (25) from the car body which is the installation substrate (27), the display device must be separated from the auxiliary substrate (39). In that occasion, it is so designed that the specular reflective layer (16) installed in the reflective resin sheet (4) is separated from the sheet(4) due to the presence of the destructive layer (14) and remains on the installation substrate (6). Hence it can be readily judged whether the display device is new and genuine or has been peeled off.

Fig. 3 shows a cross-section of a display device which is an embodiment of the present invention. In this display device, the surface-protective layer (1) and reflective resin sheet (4) are bonded via an adhesive layer (2), and an information display layer (3) is installed on the front face of the reflective resin layer (4). A specular reflective layer (16) is also installed in the reflective resin sheet (4) via a destructive layer (14) which is only partially installed. Furthermore the specular reflective layer (16) is provided with a substrate-adhesive layer (5) by which the layer (16) can be mounted on an installation substrate (6).

Fig. 4 shows a cross-section of a display device which is another optimum embodiment of the present invention. In this display device, an enclosed type micro glass beads-type retroreflective sheeting is constructed of a surface layer (11), holding layer (12), micro glass beads (13), destructive layer (14), focusing layer (15) and a specular reflective layer (16). The surface-protective layer (1) of the display device and the surface layer (11) of the reflective resin sheet(4) are bonded via an adhesive layer (2), and on the front face of the surface layer (4) an information display layer (3) is installed.

On the backs of the micro glass beads, a destructive layer (14), focusing layer (15) and specular reflective layer (16) are installed. The destructive layer (14) may be installed between the focusing layer (15) and the specular reflective layer (16), or more than one layer each of the destructive layer (14) and focusing layer (15) may be provided.

Now a method for making the enclosed micro glass beads type retroreflective sheeting as used in the display device of Fig. 4 shall be explained in detail.

A liquid blend was prepared by adding 21.1 wt parts of methyl isobutyl ketone and 5.3 wt parts of toluene as the solvents to 100 wt parts of an acrylic resin solution made by Nippon Carbide Industries Co. Inc. (tradename = NISSETSU RS-1200) and 14 wt parts of a methylated melamine resin solution made by Sanwa Chemical Co. Ltd (tradename = NIKALAC MS-11), and mixing them by stirring.

Using as the carrier film a 75 µm-thick, transparent polyethylene terephthalate film manufactured by Teijin Ltd. (tradename = Teijin Tetoron Film S-75), a 18 µm-thick surface layer (11) was prepared by applying onto said film the above-prepared liquid blend and drying the same.

Further on the surface layer (11), a liquid blend prepared by blending 100 wt parts of an acrylic resin solution made by Nippon Carbide Industries Co, Ltd. (tradename = NISSETSU RS-3000) and 12 wt parts of an isocyanate crosslinking agent made by Sumitomo Bayer Urethane Co., Ltd. (tradename = SUMIJUR N-75) with 22.6 wt parts of methyl isobutyl ketone and 9.7 wt parts of toluene as the solvents, was applied and dried to provide a 27 µm-thick holding layer (12).

In this holding layer (12), micro glass beads (13) having a refractive index of 2.20 and an average particle size of about 65 µm made by Union Co., Ltd. (tradename = UNIBEADS U45NHAC) were embedded to a depth of 50 - 80% of the glass bead diameter.

Then onto the micro glass beads (13)-embedded surface, a 10 wt% toluene solution of vinylcyclopentanorbornene resin made by JSR Corporation (tradename = ARTON FX4727) was applied and dried to provide a destructive layer (14) of 3 µm in average thickness.

Then a butyral resin powder made by Sekisui Chemical Co., Ltd. (tradename = S-LEC B BH-6) was dissolved in and diluted with, a 1:1 mixed solvent of ethanol/toluene to provide a butyral resin solution of 10% in solid content. A liquid blend of 100 wt parts of this solution with 1.8 wt parts of a methylated melamine resin solution made by Sanwa Chemical Co., Ltd. (tradename = NIKALAC MS-11) was further applied and dried to provide a focusing layer of 18 µm in average thickness.

The average combined thickness of the destructive layer (14) and the focusing layer (15) after drying was 21 µm.

On the surface of this focusing layer (15), aluminum of a purity at least 99.99% was vacuum vapor deposited to form a 0.1 µm-thick specular reflective layer (16), to provide a reflective resin sheet (4) having a retroreflective sheet structure to be used in the display device according to the present invention.

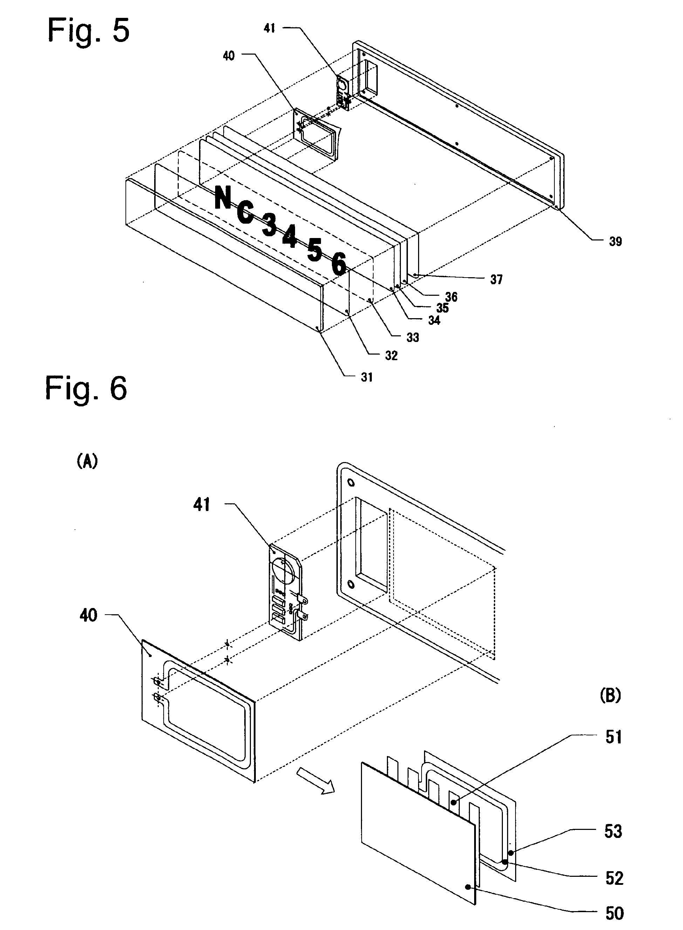

Fig. 5 shows a perspective view showing construction of a number plate for vehicles which is a display device of another embodiment of the present invention. In this display device, a reflective resin sheet (composed of 34, 35, and 36) which is formed of a surface layer (34), an information display layer (33) installed on a printed layer, a micro glass bead retroreflective elements-embedded layer (35) and a specular reflective layer (36), is installed on a surface-protective layer (31) via an adhesive layer (32). On the back of the specular reflective layer (36), a substrate-adhesive layer (37) is installed.

Furthermore, on the auxiliary substrate (39), a RFID device (41) is installed. The communication antenna (40) to be mounted on the RFID device is fixed on the display device with the substrate-adhesive layer (37). The RFID device and the communication antenna are electrically connected. As the means of the connection, mechanical connection means, connecting means such as soldering, welding, or that using a conductive adhesive can be adopted.

The surface-protective layer (31) in Fig. 5 can be made of light-transmissive resin such as acrylic resin, polycarbonate resin or vinyl chloride resin, and its preferred thickness ranges 1-8 mm.

To the information display layer (33), flexography, gravure printing, screen printing, ink jet printing, thermal transfer printing, electronic printing using a laser printer or the like can be applied. In particular, where variable information such as a number plate code is to be printed, ink jet printing, thermoelectric printing or electronic printing method using laser printer are preferred.

The auxiliary substrate (39) as adopted in Fig. 5 has a size larger than the display device to be installed on its front face and has a shape capable of wrapping-in the display device, to make it difficult to remove the device once installed in the auxiliary substrate.

Fig. 6 (A) shows an enlarged view of the RFID device (41) and communication antenna (40) as used in the embodiment of Fig. 5. Fig. 6 (B) shows a perspective view to explain the construction of the communication antenna (40).

Fig. 6 (B) shows a construction comprising an antenna layer (52) formed of a layer of metal such as copper, aluminum or nickel or of electrically conductive ink in which silver particles are dispersed, said layer having communicative function; antenna-supporting layer (50) for supporting the antenna layer (52); and an antenna-adhesive layer (53) for fixing the communication antenna (40) on the auxiliary substrate.

Furthermore, an antenna-destructive layer (51) is installed between the antenna layer (52) and antenna-supporting layer (50). This antenna-destructive layer (51) is given the same structure as that of the destructive layer (14), one of the constituents of the reflective resin sheet, as used in the display device, and hence the communication antenna (40) itself also has a destructive, theft-preventing structure. When an attempt is made to dismount the display device, the antenna layer (52) will be broken.

### Industrial Applicability

A display device equipped with specular reflective layer having retroreflective structure excels in perceptibility in the night, and hence is useful for signs such as traffic signs and construction signs; number plates on vehicles such as cars and motorcycles; safety materials such as clothing and life preservers; marking on signboards; various kinds of authentication stickers; reflector plates in visible light-, laser light-, or infrared light-reflection type sensors; and the like.

The display device according to the present invention can be used for the utility as above-described, for preventing criminal act of stealing the display device to put it to other use, and for making tampering of the display device difficult.

## Claims

1. A display device comprising at least a surface-protective layer (1), information display layer (3), light-reflective resin sheet (4) and a substrate-adhesive layer (5), which is so composed that a specular reflective layer (16) is installed on said light-reflective resin sheet (4) via a destructive layer (14), and the specular reflective layer (16) of the display device and an installation substrate (6) are adhered via the substrate-adhesive layer (5), said display device being **characterized in that**, when it is peeled off from the installation substrate (6), the separation takes place at the interface of the destructive layer (14) and any one of the layers constituting the reflective resin sheet (4), which is in contact with the destructive layer (14), and/ or by destruction of the destructive layer (14), and the specular reflective layer (16) remains on the installation substrate (6).

2. A display device as set forth in Claim 1, **characterized in that** the light-reflective resin sheet (4) is a micro glass beads-type retroreflective sheeting layer formed of micro glass beads (13) and a specular reflective layer (16) installed on at least a part of lower surfaces of the micro glass beads (13) via a destructive layer (14) and a focusing layer (15).

3. A display device as set forth in Claim 1, **characterized in that** the light-reflective resin sheet (4) is a microprismatic retroreflective sheeting layer formed of microprisms and a specular reflective layer (16) which is installed on the reflective side faces of the microprisms.

4. A display device as set forth in Claims 1 - 3, **characterized in that** the specular reflective layer (16) is installed on the light-reflective resin sheet (4) via partially installed destructive layer (14), and in an occasion of peeling the display device off from the installation substrate (6), the specular reflective layer (16) is partially broken and remains on the installation substrate (6).

5. A display device as set forth in Claims 1-4, **characterized in that** the resin constituting the destructive layer (14) is cyclopentane resin (following formulae 1a, 1b and 1c), vinylcyclopentane resin (following formula 2a), vinylcyclopentanorbornene resin (following formula 2b), cyclohexadiene resin (following formula 3a), cyclohexane resin (following formula 3b) or methacrylic acid ester resin (following formula 4): 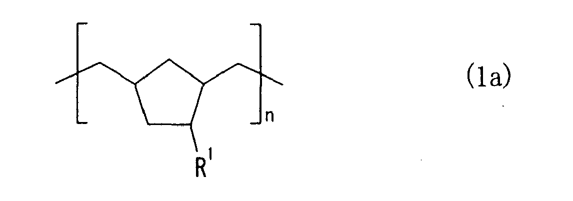 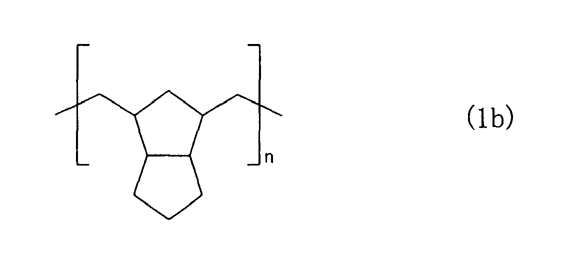 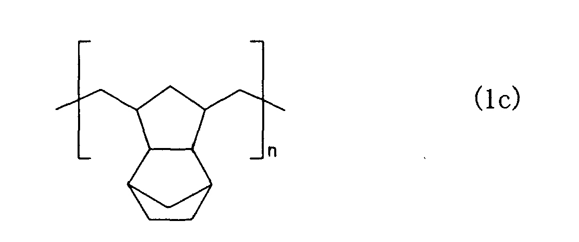 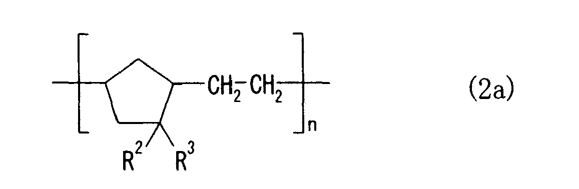 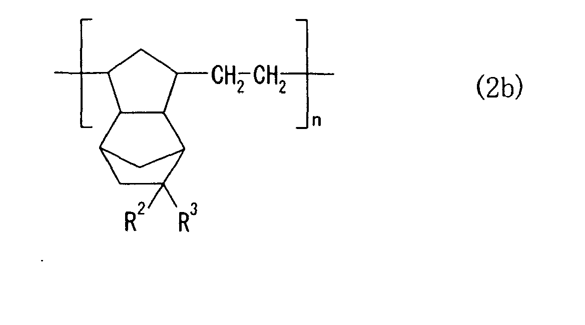 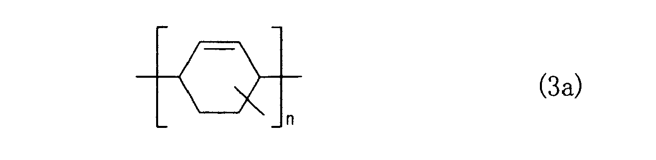 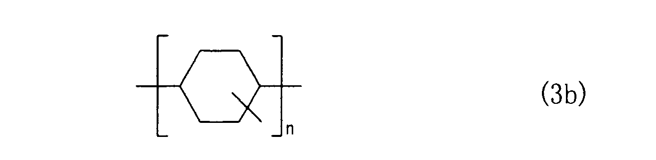 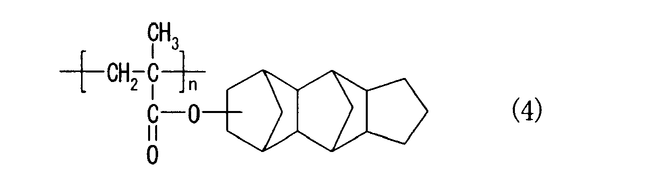 (in the above formulae, substituent R¹ is hydrogen atom or cyclohexyl, substituents R² and R³ are hydrogen atom (-H), methyl (-CH₃), cyano(-CN), methyl carboxylate (-COOCH₃), ethyl carboxylate (-COOC₂H₅), cyclohexyl carboxylate (-COO(_{c}-C₆H₅)) or n-butyl carboxylate (-COO(ₙ-C₄H₉)), and
n stands for number-average degree of polymerization).

6. A display device as set forth in Claims 1-5, **characterized in that** the display device (25) is adhered to an auxiliary substrate (26) via a substrate adhesive layer (5) or (23), said auxiliary substrate (26) being mechanically fixed on an installation substrate (6) or (27).

7. A display device as set forth in Claims 1-6, **characterized in that** an active or passive type RFID device equipped with a communication antenna (40) is installed on the back of the display device (25).

8. A display device as set forth in Claims 1-7, **characterized in that** the region of the specular reflective layer (16) overlapping with at least the region of the light-reflective resin sheet (4) on which the communication antenna is installed, is entirely or partially removed to impart radio wave transmitting ability.

9. A display device as set forth in Claims 1 - 8, **characterized in that** the specular reflective layer (16) is partially installed on the reflective resin sheet (4) so as to form a communication antenna to be used for RFID device, and when the display device (25) is peeled off from the installation substrate (6), the specular reflective layer(16) is broken and loses its antenna function.
